# FASCICULE DE BREVET EUROPEEN

(11) **EP 2 231 521 B1**
(45) Date de publication et mention de la délivrance du brevet: **18.04.2018**
(21) Numéro de dépôt: 08863489.4
(22) Date de dépôt: 11.12.2008
(51) Int. Cl.: B01J 21/08, B01J 29/03, B01J 37/00, C01B 37/00, B01J 37/03, C01B 39/04, C01B 37/02

(54) **MÉTHODE DE PRÉPARATION DE MATÉRIAUX MÉSOPOREUX**
VERFAHREN ZUR HERSTELLUNG VON MESOPORÖSEN MATERIALIEN
METHOD OF PREPARATION OF MESOPOROUS MATERIALS

(30) Priorité: 14.12.2007 FR 0708727; 21.12.2007 FR 0709011
(43) Date de publication de la demande: 29.09.2010
(73) Titulaire: Total Raffinage France, 92400 Courbevoie (FR); Centre National de la Recherche Scientifique, 75016 Paris (FR)
(72) Inventeur: BACCILE, Niki, F-75010 Paris (FR); IN, Martin, F-34790 Grabels (FR); IN-GERARDIN, Corine, F-34790 Grabels (FR); LUCK, Francis, F-93160 Noisy Le Grand (FR); REBOUL, Julien, F-34160 CASTRIES (FR); VAN DONK, Sander, B-1180 Uccle (BE)
(74) Mandataire: Largeau, Béatrice
(86) Numéro de dépôt international: PCT/FR2008/052282
(87) Numéro de publication internationale: WO 2009/081000

(56) Documents cités:
- EP-A- 1 627 853
- US-A1- 2004 267 038
- MITRA ET AL: "Synthesis and characterization of mesoporous titanium dioxide using self-assembly of sodium dodecyl sulfate and benzyl alcohol systems as templates" MICROPOROUS AND MESOPOROUS MATERIALS, ELSEVIER SCIENCE PUBLISHING, NEW YORK, US, vol. 109, no. 1-3, 8 août 2007 (2007-08-08), pages 66-72, XP022399257 ISSN: 1387-1811
- ZHANG ET AL: "Pore size design of ordered mesoporous silicas by controlling micellar properties of triblock copolymer EO20PO70EO20" MICROPOROUS AND MESOPOROUS MATERIALS, ELSEVIER SCIENCE PUBLISHING, NEW YORK, US, vol. 89, no. 1-3, 24 février 2006 (2006-02-24), pages 179-185, XP005271592 ISSN: 1387-1811

## Description

La présente invention concerne le domaine des matériaux poreux, en particulier mésoporeux, leur utilisation, notamment dans le domaine des tamis moléculaire ou de la catalyse, en particulier dans le domaine de la pétrochimie, et des réactifs permettant de préparer ces matériaux.

Les matériaux poreux inorganiques sont largement utilisés, notamment en tant que catalyseur ou supports de catalyseurs dans de nombreuses applications industrielles. Ces matériaux présentent une grande surface spécifique et peuvent avoir une structure amorphe, para-cristalline ou cristalline. Les matériaux amorphes, comme les gel de silice ou d'alumine ne possèdent pas d'ordre cristallographique à longue distance, alors que les solides para-cristallins comme l'alumine gamma ou éta sont semi ordonnés, montrant ainsi des pics de diffractions aux rayons X larges. Ces deux classes de matériaux présentent en général une large distribution de pores, pour la plupart dans la gamme des tailles allant de 1 à 100 nm, et plus précisément dans la gamme des mésopores, de 2 à 50 nm.

Le besoin est toujours croissant d'améliorer l'efficacité catalytique. Cette amélioration peut passer par le développement de matériaux présentant des surfaces spécifiques accessibles plus grandes et des volumes poreux plus important. Dans les années 1990 les matériaux silices mésoporeuses appelées M41S présentant une taille de pore uniforme et ajustable dans la gamme de 1,3 à 10 nm ont été découverts. En faisant varier les conditions de synthèse, des matériaux de ce type avec des morphologies hexagonales (MCM-41), cubiques (MCM-48) ou en couches ont été décrits.

Contrairement aux matériaux microporeux qui sont en général synthétisés par structuration autour de molécules isolées, les matériaux M41S sont générés autour d'assemblages de molécules. Les premières structures ont été obtenues en utilisant des micelles de molécules de surfactant ayant une chaîne alkyle et une tête polaire cationique. Ces matériaux présentaient une épaisseur de paroi limitée, allant de 0,8 à 1,2 nm, et une faible stabilité thermique.

Une grande avancée a été apportée par l'utilisation de surfactants de type amine, diamine ou oxydes inorganiques, qui ont permis l'obtention d'une plus grande épaisseur des parois de structure, améliorant ainsi la stabilité des matériaux mésoporeux structurés. Un autre développement majeur a été l'utilisation de copolymères séquencés amphiphiles du type PEO-PPO-PEO qui ont permis d'augmenter la taille des mésopores jusqu'à environ 30 nm.

Le document Mitra et al. Synthesis and characterization of mesoporous titanium dioxide using self-assembly of sodium dodecyl sulfate and benzyl alcohol systems as templates, Microporous and Mesoporous Materials, 109 (2008), 66-72, décrit la synthèse de particules nanométriques de TiO₂ mésoporeux par co-assemblage de systèmes surfactant-co-surfactant. L'alcool benzylique (BA) est utilisé en tant que co-surfactant avec un surfactant anionique, le SDS. Ces surfactants s'auto assemblent afin de former un Agent Directeur de Structure (SDA). Les SDA sont ensuite retirés par extraction ou par action de borohydrures.

Cependant, malgré les grands progrès de ces dernières années en terme de synthèse, caractérisation et compréhension des mécanismes de formation des matériaux mésoporeux structurés, les applications industrielles sont toujours limitées notamment par le coût de ces matériaux.

Lors de la synthèse de ces matériaux l'agent structurant peut se retrouver piégé à l'intérieur des pores. Afin d'enlever l'agent structurant des pores, le matériau est en général calciné à haute température, ce qui décompose l'agent structurant en plus petit composants qui peuvent être évacués des pores. La calcination peut engendrer des effets négatifs, comme la détérioration de la structure du matériau, le relargage d'effluents qui peuvent causer des problèmes environnementaux ou la consommation importante d'énergie.

Il est donc souhaitable d'avoir un procédé qui puisse être réalisé dans des conditions douces, notamment qui évite une étape de chauffage à haute température, qui permette de réutiliser au moins en partie l'agent structurant lors d'autres synthèses, qui puisse être réalisé avec des solvants peu onéreux, par exemple dans l'eau, et/ou qui permette de contrôler au moins certaines caractéristiques du matériau obtenu, comme la taille des pores, la structure ou la résistance thermique.

D'autre part, il n'est pas toujours aisé d'obtenir des matériaux présentant les propriétés chimiques désirées, notamment en terme de tailles de pores, de résistance ou de structure. Les matériaux peuvent être onéreux, difficiles à préparer, nécessiter des conditions générant de grandes quantités de réactifs dégradés.

Il subsiste donc un besoin pour des matériaux qui présentent des propriétés chimiques particulières, qui soient bon marché, faciles à fabriquer et qui présentent une synthèse qui soit amicale pour l'environnement.

Selon un aspect, la présente invention a pour objet un procédé de fabrication de matériau mésoporeux, comprenant les étapes définies dans la revendication 1.

Brève description des figures :
La figure 1 décrit schématiquement le principe de l'invention,
La figure 2 est un graphique représentant le volume absorbé de matériaux mésoporeux,
La figure 3 est un graphique représentant le volume absorbé de matériaux mésoporeux,
La figure 4 représente les spectres d'adsorption IR de différent matériaux, et
La figure 5 représente des images de microscopie électronique en transmission (MET) et des courbes de diffusion des rayons X aux petits angles de matériaux.

Tout particulièrement, l'agent structurant comprend des parties structurantes identiques. Selon une autre variante, l'agent structurant comprend des parties structurantes différentes, et en particulier deux, trois, quatre, voire cinq types différents.

Selon l'invention, les parties structurantes sont des polymères hydrophiles, solubles dans l'eau. Les polymères hydrophiles utilisés sont les copolymères bloc double hydrophiles, les copolymères greffés double hydrophile, les copolymères triblocs, les polymères en peigne, les polymères greffés, les copolymères statistiques, les terpolymères et les homopolymères.

Les parties structurantes peuvent comprendre au moins deux, notamment deux, composantes solubles dans l'eau dont :
- au moins une, notamment une, composante peut être rendue insoluble dans l'eau sous l'effet de l'ajout d'un inducteur et/ou sous l'effet de la variation d'un paramètre physico-chimique, et
- au moins une, notamment une, composante reste soluble dans l'eau, et qui permettra de stabiliser le colloïde.

La composante non réactive soluble dans l'eau peut être neutre (non chargée). Dans ce cas, il peut s'agir d'un segment polymérique de type poly(oxyde d'éthylène).

La composante réactive, qui peut devenir insoluble dans l'eau sous l'effet de l'ajout d'un inducteur et/ou sous l'effet de la variation d'un paramètre physico-chimique, peut être neutre ou chargée, négativement ou positivement.

Bien entendu, la composante rendue insoluble peut être à nouveau rendue soluble soit de manière réversible, et soit par la variation du même paramètre, soit par un autre moyen, comme un autre paramètre physico-chimique.

Par « soluble dans l'eau », on entend au sens de la présente invention une solubilité dans l'eau à température ambiante, celle-ci peut être supérieure ou égale à 3 mg/ml, notamment supérieure ou égale à 6 mg/ml, et en particulier supérieure ou égale à 8 mg/ml.

Par « insoluble dans l'eau », on entend au sens de la présente invention une solubilité à température ambiante dans l'eau et dans les conditions rendant la composante insoluble, en particulier une solubilité inférieure ou égale à 8 mg/ml, notamment inférieure ou égale à 6 mg/ ml, et en particulier inférieure ou égale à 3 mg/ ml.

Par « polymère » on entend au sens de la présente invention un corps composé d'au moins une unité se répétant, notamment au moins dix fois, en particulier au moins vingt fois, voire au moins cinquante fois, et tout particulièrement au moins cent fois.

En particulier les parties structurantes sont liées par au moins un type d'interaction, notamment choisis parmi les liaisons hydrogène, les liaisons électrostatiques, les liaisons de coordination, les liaisons dipolaires, la solvatation et les interactions hydrophobes.

Le procédé peut permettre de récupérer au moins 70 %, notamment au moins 75 %, en particulier au moins 80 %, voire 85 %, plus particulièrement 90 % et encore plus particulièrement au moins 95 % en poids des deux parties structurantes.

La solution comprenant les deux parties structurantes récupérés d'une synthèse précédente peut notamment être réutilisé telle quelle pour une nouvelle synthèse.

L'agent structurant peut se présenter sous forme de colloïdes, et en particulier de colloïdes dont la taille et/ou le diamètre moyen va de 1 nm à 10 micromètres, notamment de 1 nm à 2 micromètres.

On entend par « colloïdes » au sens de la présente invention, des particules dont la taille est supérieure aux molécules qui les constituent (taille supramoléculaire) mais suffisamment petite pour que le mélange demeure homogène. En particulier, leur taille va de un nanomètre (10⁻⁹ m) à une dizaine de micromètres (soit 10⁻⁵ m). Les colloïdes peuvent encore être appelés micelles ou agrégats micellaires.

La formation de l'agent structurant par les parties structurantes peut notamment être induite par addition d'au moins un inducteur, l'inducteur peut être un composant chimique et/ou un composant physique. L'inducteur peut permettre la modification d'au moins un paramètre physico-chimique, notamment « chimique » comme la variation du pH, de la force ionique et/ou « physique » comme la modification de la température.

L'inducteur peut être un ion, comme les protons ou les ions hydroxydes lors de la variation de pH, une molécule chargée ou neutre, un polymère chargé ou neutre, un copolymère, copolymère à blocs ou statistique, greffé ou peigne.

L'inducteur peut être de charge opposée à la composante réactive de la partie structurante.

Par exemple une complexation entre l'inducteur et la composante réactive de la partie structurante peut permettre d'obtenir des colloïdes. En l'occurrence, ce sont des agents structurants des matériaux.

Lorsqu'une composante de la partie structurante est thermosensible, une variation de température peut être utilisée pour rendre insoluble dans l'eau cette composante et conduire alors à la formation de colloïde. Une composante thermosensible de la partie structurante peut être du Poly(N-isopropylacrylamide) (PNIPAAm) ou des Poly(vinyl ether)s.

Tout particulièrement, l'agent structurant est formé en solution, en particulier en solution aqueuse.

Avantageusement, le procédé est réalisé à basse température, c'est-à-dire à une température inférieure ou égale à 200°C, notamment à une température inférieure à 100°C, et en particulier à température ambiante.

Le procédé peut permettre d'obtenir le matériau aux pressions autogènes de solutions, notamment aqueuses, portées jusqu'à 200° C, mais en général le procédé est conduit à pression atmosphérique.

Selon un autre de ses aspects, l'invention a pour objet l'utilisation d'au moins un composé présentant au moins deux parties structurantes assemblées par au moins un type d'interaction réversible non-covalente en tant qu'agent structurant recyclable dans la préparation d'un matériaux poreux, notamment à température ambiante.

Selon l'invention, le matériau mésoporeux est formé à partir de précurseurs de silice, alumine, silice-alumine, zircone, titane, comme par exemple du tétraéthoxyde de silicium (TEOS), des alkoxydes d'aluminium, des alkoxydes ou des sels de titane ou de zirconium. Le matériau peut être formé aussi à partir de nanoparticules minérales préformées.

Tout particulièrement, le procédé met en oeuvre les parties structurantes et le précurseur du matériau mésoporeux en un rapport pondéral (partie structurante/masse totale du matériau précurseur) allant de 0,20 à 0,65, notamment de 0,30 à 0,55.

D'autre part, ce procédé peut également permettre de créer des mésoporosités dans des zéolites et/ou des zéotypes. Ceci créerait une porosité secondaire intra-cristalline de mésopores structurés existant auprès des micropores de la zéolite

Les procédés connus permettant l'obtention de matériaux comprenant à la fois des micropores et des mésopores peuvent nécessiter un chauffage à haute température qui peut générer des défauts dans la structure du matériau et/ou des pores asymétriques.

Le procédé selon l'invention peut permettre de créer de la mésoporosité sans affecter la microporosité initiale, en terme de composition et/ou en terme de structure.

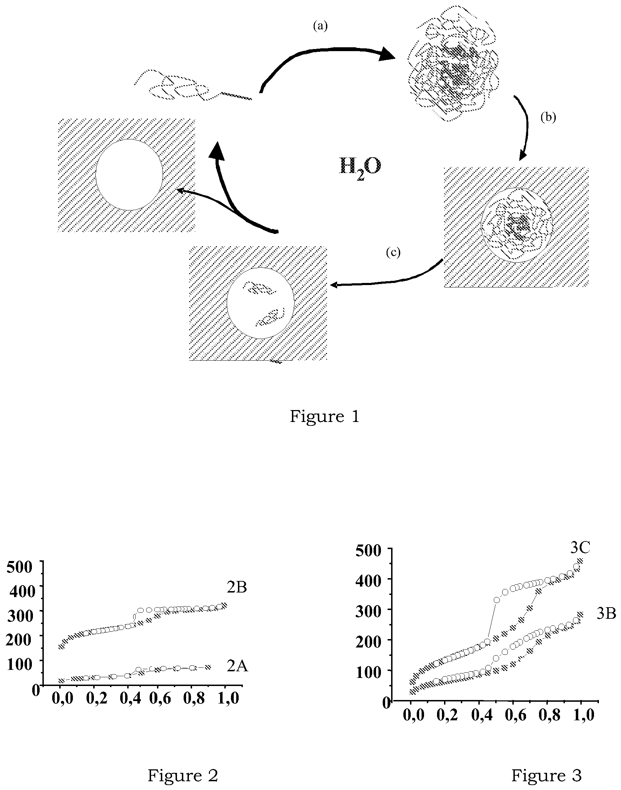

La figure 1 décrit un mode de réalisation particulier du procédé dans lequel l'agent structurant, polymère hydrophile, est formé par assemblage, micellisation dans l'eau, des parties structurantes, l'assemblage étant induit notamment par modification d'un paramètre physico-chimique (étape a), puis le matériau mésoporeux est formé, par polycondensation inorganique (étape b), l'agent structurant est ensuite désassemblé et relâché par une modification inverse à celle de l'étape a) d'un paramètre physico-chimique (étape c) et les parties structurantes sont récupérés et peuvent être réutilisées.

Les figures 2 et 3 sont des isothermes d'adsorption-désorption d'azote effectués pour caractériser des matériaux poreux. Le gaz utilisé pour réaliser ces mesures est l'azote. Ces figures présentent en abscisse la pression partielle (P/Po) en azote et en ordonnée le volume adsorbé (en cm³/g) dans le matériau.

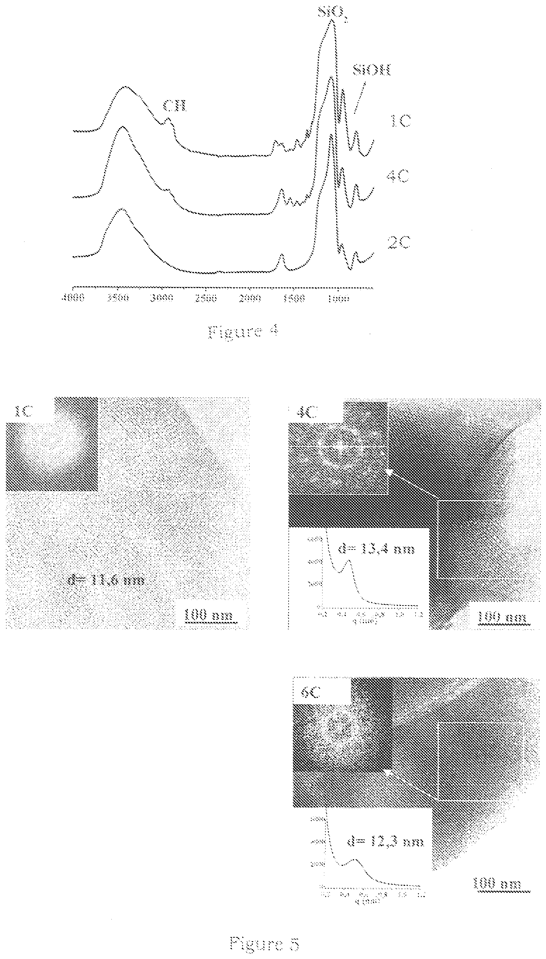

La figure 4 est un spectre IR de différents composés (avec la longueur d'onde en cm⁻¹ en abscisse).

La figure 5 présente des images de microscopie électronique en transmission (MET) et des courbes de diffusion des rayons X aux petits angles de composés (avec l'intensité en ordonnée et la longueur d'onde en nm⁻¹ en abscisse).

Selon une variante, le procédé peut comprendre une étape dans laquelle des cristaux de zéolite sont assemblés sur l'agent structurant. Ceci peut ainsi créer un matériau mésoporeux avec des parois de zéolite cristallin.

Selon une autre variante, l'agent structurant crée des mésopores durant la synthèse du zéolite. L'agent structurant est alors introduit pendant la synthèse de la zéolithe.

Selon encore un autre de ses aspects, l'invention a encore pour objet l'utilisation de micelles réversibles permettant de préparer des matériaux mésoporeux. Les micelles peuvent comprendre ou être constitués des composés décrits ci-dessus.

Selon un aspect, l'invention a également pour objet un matériau mésoporeux obtenu selon le procédé décrit ci-dessus.

Selon une variante particulière, le matériau mésoporeux comprend également des micropores. Dans de tels matériaux, la présence de mésopores intra-cristallins sur des catalyseurs zéolites peut permettre d'améliorer l'accessibilité et le transport des réactifs et produits à l'intérieur du cristal zéolite, tandis que les micropores du zéolite induisent les propriétés de sélection de formes préférées.

Le matériau mésoporeux peut comprendre ou être constitué de silice, d'oxyde de titane, d'alumine, d'oxydes métalliques ou de composés mixtes comprenant ces différentes compositions.

Selon encore un autre de ses aspects, l'invention a pour objet l'utilisation d'un matériau mésoporeux en tant que tamis moléculaire ou en tant que catalyseur, notamment de réactions chimiques, et en particulier dans le domaine de la pétrochimie.

### EXEMPLES

Les mésostructures ont été contrôlées par Diffraction des Rayons X sur un diffractomètre Bruker D8 et par SAXS. La mesure SAXS a été effectuée dans une configuration utilisant une anode tournante en cuivre (4kW) en tant que source de rayons avec un monochromateur « Osmic » focalisant multicouche donnant un haut flux (10⁸ photons/sec) et une collimation ponctuelle a été employée. Un détecteur en « assiette d'image » (Image Plate) 2D a été utilisé.

Les images TEM (ou MET) ont été obtenues sur un microscope JEOL 1200 EX II à partir d'échantillons microtomés.

Les mesures d'adsorption / désorption de N₂ ont été faites avec un Micromeretics ASAP 2010.

### Exemple 1A : Synthèse d'un matériau structuré

Le polymère dibloc acide polyméthacrylique (PMA)-b-polyoxyde d'éthylène (PEO) (M_{PEO} = 5000 g/mol ; M_{PMA} = 2100 g/mol de Polymer Source, Inc.) (88 mg) et l'oligochitosane lactate (Masse du polymère environ 5000 g/mol polymère ; Aldrich) (80 mg) sont ajoutés à de l'eau (9,5 g), le pH est de 4,3 et la température est de 25°C. Puis du TEOS (Aldrich) (0,319 ml) est ajouté et mélangé à l'ensemble. Une émulsion se forme et le pH est porté à 2. Après environ 15 minutes sous agitation, le TEOS est hydrolysé, le pH est alors porté à 5. Un précipitât est obtenu après environ 20 minutes. Le mélange est agité à température ambiante pendant 24h.

Une dispersion 1A est obtenue. Cette dispersion 1A est filtrée sur fritté, une solution 1A est récupérée d'un côté et un matériau structuré 1A de l'autre.

### Exemple 1B : Synthèse d'un matériau structuré

Le polymère dibloc acide polyméthacrylique (PMA)-b-polyoxyde d'éthylène (PEO) (M_{PEO} = 5000 g/mol ; M_{PMA} = 2100 g/mol de Polymer Source, Inc.) (88 mg) et un polymère polyéthylèneimine (PEI) de formule -(CH₂-CH₂-NH)n- (M_{PEI} = 700 g/ mol, de chez Aldrich) (dans un rapport molaire NH de PEI/COOH de PMAbPEO égal à 1) sont ajoutés à de l'eau (9,5 g). Puis du TEOS (Aldrich) (0,319 ml) est ajouté et mélangé à l'ensemble. Le pH est porté à 2, puis le pH est ajusté à 4. Un précipitât est obtenu après environ 20 minutes. Le mélange est agité à température ambiante pendant 24h.

Une dispersion 1B est obtenue. Cette dispersion 1B est filtrée sur fritté, une solution 1B est récupérée d'un côté et un matériau structuré 1B de l'autre.

### Exemple 1C : Synthèse d'un matériau structuré

Une variante du procédé de l'exemple 1B, réalisé avec la polyéthylèneimine, consiste à effectuer la même procédure que dans l'exemple 1B mais en portant la température à 80°C après l'ajustement du pH. Cette variante conduit à la dispersion 1C, puis après filtration et séparation du solide, à la solution 1C et au matériau structuré 1C.

### Exemple comparatif 2A : Synthèse d'un matériau poreux par calcination

Le matériau structuré 1A subit une calcination selon le profil suivant pour donner respectivement les matériaux mésoporeux 2A.

La calcination des poudres est effectuée via un procédé en deux étapes dans lequel :
- la première rampe dure 6 heures et part de la température ambiante (25°C) jusqu'à 200°C à une vitesse de 3°C/min., et
- la deuxième rampe dure 6 heures et part de la température de 200°C pour aller jusqu'à 620°C à une vitesse de 3°C/min.

Les poudres sont laissées revenir à température ambiante et donnent les matériaux mésoporeux 2A.

La figure 2 représente les isothermes d'adsorption-désorption effectués pour caractériser le matériau poreux 2A.

### Exemple comparatif 2B : Synthèse d'un matériau poreux par calcination

Le matériau structuré 1B subit une calcination selon le profil suivant pour donner respectivement les matériaux mésoporeux 2B.

La calcination des poudres est effectuée via un procédé en deux étapes dans lequel :
- la première rampe dure 6 heures et part de la température ambiante (25°C) jusqu'à 200°C à une vitesse de 3°C/min., et
- la deuxième rampe dure 6 heures et part de la température de 200°C pour aller jusqu'à 620°C à une vitesse de 3°C/min.

Les poudres sont laissées revenir à température ambiante et donnent les matériaux mésoporeux 2B.

La figure 2 représente les isothermes d'adsorption-désorption effectués pour caractériser le matériau poreux 2B.

### Exemple comparatif 2C : Synthèse d'un matériau poreux par calcination

Le matériau structuré 1C subit une calcination selon le profil suivant pour donner respectivement les matériaux mésoporeux 2C.

La calcination des poudres est effectuée via un procédé en deux étapes dans lequel :
- la première rampe dure 6 heures et part de la température ambiante (25°C) jusqu'à 200°C à une vitesse de 3°C/min., et
- la deuxième rampe dure 6 heures et part de la température de 200°C pour aller jusqu'à 620°C à une vitesse de 3 °C/min.

Les poudres sont laissées revenir à température ambiante et donnent les matériaux mésoporeux 2C.

### Exemple 3A : Synthèse d'un matériau poreux selon l'invention (« lavage ex situ »)

Une dispersion 1A telle que décrite dans l'exemple 1A est filtrée. La poudre 1A obtenue est mise en dispersion 3A dans de l'eau (même volume que la dispersion 1) à pH 8 pendant 24h, puis la dispersion 3A est filtrée sur fritté, le matériau mésoporeux 3A est obtenu d'un côté, puis séché à 60°C pendant 12h, et la solution 3A (filtrat) est récupérée et peut être réutilisée.

### Exemple 3B : Synthèse d'un matériau poreux selon l'invention (« lavage ex situ »)

Une dispersion 1B telle que décrite dans l'exemple 1B est filtrée. La poudre 1 obtenue est mise en dispersion 3B dans de l'eau (même volume que la dispersion 1) à pH 8, sous agitation, pendant 24h, puis la dispersion 3B est filtrée sur fritté, le matériau mésoporeux 3 est obtenu d'un côté, puis séché à 60°C pendant 12h, et la solution 3B (filtrat) est récupérée et peut être réutilisée.

Le matériau mésoporeux 3B est caractérisé par son isotherme d'adsorption/désorption d'azote sur la figure 3.

### Exemple 3C : Synthèse d'un matériau poreux selon l'invention (« lavage ex situ »)

Une dispersion 1C telle que décrite dans l'exemple 1C est filtrée. La poudre 1C obtenue est mise en dispersion 3C dans de l'eau (même volume que la dispersion 1) à pH 8 pendant 24h, puis la dispersion 3C est filtrée sur fritté, le matériau mésoporeux 3C est obtenu d'un côté, puis séché à 60°C pendant 12h, et la solution 3C (filtrat) est récupérée et peut être réutilisée.

Le matériau mésoporeux 3C est caractérisé par son isotherme d'adsorption/désorption d'azote sur la figure 3.

### Exemple 4C : Synthèse d'un matériau poreux selon l'invention (« lavage in situ »)

A une dispersion 1C telle que décrite dans l'exemple 1C est ajouté une base (NaOH, 1 M) jusqu'à obtention d'un pH 8. La dispersion est agitée pendant 24h, puis filtrée. D'un côté, le filtrat correspond au matériau mésoporeux 4C, celui-ci séché à 60°C pendant 12h, et d'un autre côté, la solution 4 (filtrat) est récupérée et peut être réutilisée.

Le matériau 4C est caractérisé par diffusion des rayons X et microscopie électronique en transmission. Ces deux analyses montrent que le matériau 4, obtenu après lavage, présente une mésostructure ordonnée, avec une distance de corrélation de 1,34 nm.

La figure 4 présente les spectres IR du matériau poreux 4C obtenu par lavage in situ du matériau poreux 2C obtenu par calcination et du matériau 1C.

Ce spectre IR permet de voir qu'en ce qui concerne les parties minérales, il n'y a pas de différences substantielles entre les différents composés présentés. Cependant, on peut observer que les pics de silanol aux environs de 900 cm⁻¹ diminuent avec le lavage à pH 8 et le pic SiO₂ augmente, peut être du fait de la condensation de la silice.

Il peut encore être observé dans le cas de la calcination une réduction des pics à 950 et 800 cm⁻¹, concernant les pics de SiO₂, qui peut être causé par une condensation entre les groupes silanol.

Le grand pic OH dans la région 3500 cm⁻¹ est sans doute dû à la plus forte quantité d'eau dans les matériaux lavés, ainsi que le laisse penser le pic à 1640 cm⁻¹. La plus forte quantité d'eau est peut être liée à la porosité créée par le lavage à pH 8.

On peut encore remarquer que le pic à 3000 cm⁻¹ diminue d'intensité ce qui tend à montrer la diminution, voire la disparition, de matériau organique dans les composés lavés 4C et calcinées 2C.

### Exemple 5C : démonstration de la réutilisation

Le matériau 1C a donné après lavage in situ le matériau mésoporeux 4C. La solution 4C, récupérée après filtration et séparation du matériau mésoporeux 4C, est réutilisée telle quelle pour une nouvelle synthèse de matériau. Une procédure de synthèse identique à celle du matériau 1C est donc réalisée, à partir de la solution 4C (ajout TEOS, pH porté à 2, puis à 5, mélange 24h, à température ambiante). Un matériau structuré 5C est alors obtenu. Il est lavé à pH 8 et après filtration et séparation, le matériau 6C est obtenu.

Les résultats de diffusion des rayons X présentés sur la figure 5 montrent que le matériau 1C est mésostructuré, et que le matériau poreux 4C est aussi mésostructuré. Après recyclage des polymères, le nouveau matériau formé 6C, présente aussi une structure à l'échelle mésoscopique. La distance de corrélation observée est de 12,3 nm.

## Revendications

1. Procédé de fabrication de matériau mésoporeux comprenant les étapes de:
- (a) préparation d'une solution aqueuse d'au moins un agent structurant présentant au moins deux parties structurantes assemblées par au moins un type d'interaction réversible non-covalente et d'un précurseur de matériau mésoporeux,
- (b) formation du matériau mésoporeux par polycondensation inorganique,
- (c) désassemblage des au moins deux parties de l'agent structurant à basse température par une modification inverse à l'étape (a) d'un paramètre physico-chimique,
- récupération d'au moins 50 % en poids des deux parties structurantes non dégradées et du matériau mésoporeux,
**caractérisé en ce que** :
- les parties structurantes sont des polymères hydrophiles, solubles dans l'eau, choisis parmi les copolymères bloc double hydrophiles, les copolymères greffés double hydrophile, les copolymères triblocs, les polymères en peigne, les polymères greffés, les copolymères statistiques, les terpolymères et les homopolymères,
- ledit précurseur de matériau mésoporeux est choisi parmi les précurseurs de silice, alumine, silice-alumine, zircone, titane, des alkoxydes d'aluminium, des alkoxydes ou des sels de titane ou de zirconium,
- le rapport pondéral (partie structurante/masse totale du matériau précurseur) de l'étape a) est de 0.20 à 0.65,
- au cours de l'étape a) l'agent structurant est formé par assemblage par micellisation dans l'eau des parties structurantes, cet assemblage étant induit par modification d'au moins un paramètre physico-chimique choisi parmi le pH et la température.

2. Procédé selon la revendication 1, **caractérisé en ce que** l'agent structurant comprend des parties structurantes identiques.

3. Procédé selon la revendication 1, **caractérisé en ce que** l'agent structurant comprend des parties structurantes différentes, et en particulier de deux, trois, quatre, voire cinq types différents.

4. Procédé selon l'une quelconque des revendications 1 à 3, **caractérisé en ce que** l'agent structurant se présente sous forme de colloïdes, et en particulier de colloïdes dont la taille va de 10⁻⁹ m à 10⁻⁵ m.

5. Procédé selon l'une quelconque des revendications 1 à 4, **caractérisé en ce que** la température est inférieure ou égale à 200°C, voire inférieure ou égale à 100°C.

6. Procédé selon l'une quelconque des revendications 1 à 5, **caractérisé en ce que** le précurseur de matériau mésoporeux est le tétraéthoxyde de silicium (TEOS).

## Patentansprüche

1. Verfahren zur Herstellung von mesoporösem Material, umfassend die folgenden Schritte:
- (a) Herstellen einer wässrigen Lösung mindestens eines strukturierenden Mittels, das mindestens zwei strukturierende Teile aufweist, die von mindestens einem reversiblen nicht-kovalenten Interaktionstyp verbunden sind und eines Vorläufers eines mesoporösen Materials,
- (b) Bilden des mesoporösen Materials durch anorganische Polykondensation,
- (c) Trennen der mindestens zwei Teile des strukturierenden Mittels bei niedriger Temperatur durch eine gegenüber Schritt (a) inverse Modifizierung eines physikalisch-chemischen Parameters,
- Rückgewinnen von mindestens 50 Gew.-% der zwei nicht abgebauten strukturierenden Teile und des mesoporösen Materials,
**dadurch gekennzeichnet, dass**:
- die strukturierenden Teile hydrophile, wasserlösliche Polymere sind, ausgewählt als den doppelt hydrophilen Block-Copolymeren, den doppelt hydrophilen Pfropfpolymeren, den Dreiblock-Copolymeren, den Kammpolymeren, den Pfropfpolymeren, den statistischen Copolymeren, den Terpolymeren und den Homopolymeren,
- der Vorläufer mesoporösen Materials aus den Vorläufern von Siliziumoxid, Aluminiumoxid, Siliziumoxid-Aluminiumoxid, Zirkon, Titan, Aluminiumalkoxyden, Alkoxyden oder Titan- oder Zirkoniumsalzen ausgewählt ist,
- das Gewichtsverhältnis (strukturierender Teil/Gesamtmasse des Vorläufermaterials) von Schritt a) 0,20 bis 0,65 beträgt,
- während Schritt a) das strukturierende Mittel mittels Verbindung durch Micellisierung in Wasser der strukturierenden Teile gebildet wird, wobei diese Verbindung durch Modifizierung von mindestens einem physikalisch-chemischen Parameter induziert ist, ausgewählt aus dem pH und der Temperatur.

2. Verfahren nach Anspruch 1, **dadurch gekennzeichnet, dass** das strukturierende Mittel identische strukturierende Teile umfasst.

3. Verfahren nach Anspruch 1, **dadurch gekennzeichnet, dass** das strukturierende Mittel unterschiedliche strukturierende Teile und insbesondere von zwei, drei, vier, ja sogar fünf unterschiedlichen Typen umfasst.

4. Verfahren nach einem der Ansprüche 1 bis 3, **dadurch gekennzeichnet, dass** das strukturierende Mittel in Form von Kolloiden und insbesondere von Kolloiden vorliegt, deren Größe von 10⁻⁹ m bis 10⁻⁵ m reicht.

5. Verfahren nach einem der Ansprüche 1 bis 4, **dadurch gekennzeichnet, dass** die Temperatur unter oder gleich 200 °C, ja sogar unter oder gleich 100 °C beträgt.

6. Verfahren nach einem der Ansprüche 1 bis 5, **dadurch gekennzeichnet, dass** der Vorläufer mesoporösen Materials das Tetraethylorthosilicat (TEOS) ist.

## Claims

1. A method for producing a porous material comprising steps of:
- (a) preparing a solution of at least one structuring agent having at least two structuring parts assembled by at least one non-covalent reversible type of interaction and of a precursor of mesoporous material,
- (b) forming the mesopourous material by inorganic polycondensation,
- (c) disassembling the at least two parts of the structuring agent at a low temperature by a modification that is the reverse of step a) of a physico-chemical parameter,
- recovering at least 50% by weight of the two non-degraded structuring parts and the mesoporous material,
**characterized in that**
- the structuring parts are hydrophilic polymers, water-soluble, chosen from double hydrophilic block copolymers, double hydrophilic graft copolymers, triblock copolymers, comb polymers, graft polymers, statistical copolymers, terpolymers and homopolymers,
- said precursor of mesoporous material is chosen from precursors of silica, alumina, silica-alumina, zirconia, titania, aluminum alkoxides, or titanium or zirconium alkoxides or salts,
- the weight ratio (structuring part/total mass of precursor material) of step a) extends from 0.20 to 0.65,
- during step a) the structuring agent is formed by assembling by micellization in water of the structuring parts, such assembling being induced by modifying at least a physico-chemical parameter chosen among pH and temperature.

2. The method as claimed in claim 1, **characterized in that** the structuring agent comprises identical structuring parts.

3. The method as claimed in claim 1, **characterized in that** the structuring agent comprises different structuring parts, and in particular two, three, four or even five different types.

4. The method as claimed in any one of claims 1 to 3, **characterized in that** the structuring agent is in the form of colloids, and in particular colloids of which the size extends from 10⁻⁹ m to 10⁻⁵ m.

5. The method as claimed in any one of claims 1 to 4, **characterized in that** the temperature is less than or equal to 200°C, or even less than or equal to 100°C.

6. The method as claimed in any one of claims 1 to 5, **characterized in that** the precursor of the mesoporous material is silicon tetraethoxide (TEOS).
